# EUROPÄISCHE PATENTSCHRIFT

(11) **EP 0 950 433 B1**
(45) Veröffentlichungstag und Bekanntmachung des Hinweises auf die Patenterteilung: **14.01.2004**
(21) Anmeldenummer: 98112957.0
(22) Anmeldetag: 13.07.1998
(51) Int. Cl.: B01J 19/32, C02F 3/10, B01D 53/88, B01D 53/85

(54) **Packung für Stoffaustausch-Kolonnen**
Packing for mass exchange columns
Garnissage pour colonnes d' échange de matière

(30) Priorität: 18.04.1998 DE 29807007 U
(43) Veröffentlichungstag der Anmeldung: 20.10.1999
(73) Patentinhaber: Gorak, Andrzej, Prof. Dr.-Ing., 58454 Witten (DE); Kreul, Lars U., Dipl.-Ing., 44139 Dortmund (DE)
(72) Erfinder: Gorak, Andrzej, Prof. Dr.-Ing., 58454 Witten (DE); Kreul, Lars U., Dipl.-Ing., 44139 Dortmund (DE)
(74) Vertreter: COHAUSZ DAWIDOWICZ HANNIG & PARTNER

(56) Entgegenhaltungen:
- EP-A- 0 428 265
- WO-A-90/02603
- DE-A- 19 701 045
- US-A- 5 348 710
- US-A- 5 470 542

## Beschreibung

Die Erfindung betrifft eine Packung für Stoffaustausch-Kolonnen mit abgeschlossenen Kammern mit chemisch, physikalisch und/oder biologisch, insbesondere katalytisch wirksamem Material, deren Wände flüssigkeitsdurchlässig sind.

Die Erfindung betrifft eine strukturierte Mehrzweckpackung mit mindestens Zweifachfunktionalität aus Stofftrennungs- und Zweitfunktionalitätselementen, wobei letztere jeweils aus mehreren abgeschlossenen Kammern bestehen, die mit physikalisch, chemisch oder biologisch wirksamem Material im Sinne der Zweitfunktionalität gefüllt sind, und Volumen und Anzahl der Kammern und Elemente entsprechend den Prozessanforderungen in optimierender Weise variiert werden können.

In der verfahrenstechnischen Industrie und im Umweltschutz ist es von Vorteil, physikalische Transportvorgänge, z. B. die Stofftrennung durch Destillation, Rektifikation oder Absorption, mit chemischen, biologischen oder anderen physikalischen Vorgängen wie der reaktiven bzw. bakteriellen Umwandlung, Adsorption etc. als Zweitfunktionalität simultan in einer Prozesseinheit durchzuführen. Je nach betrachtetem Stoffsystem und speziellen Prozessanforderungen sollte es dabei möglich sein, einerseits die Kontaktflächen zwischen den unterschiedlichen fluiden Phasen als entscheidende Einflussgröße für den Stoffaustausch, andererseits die Verweilzeiten sowie die aktiven Oberflächen als Einflussgrößen der Zweitfunktionalität in unterschiedlicher Weise zu variieren, um den Prozess in möglichst optimaler Weise durchführen zu können. Um dies zu realisieren, benötigt man auf das Einsatzziel zugeschnittene Einbauten mit Mehrzweckeignung, das heißt mindestens zweifacher Funktionalität und hoher Flexibilität.

Für bestimmte heterogen katalysierte Reaktionen in Flüssigphasen werden sogenannte Katalysierende Festbettreaktoren eingesetzt. EP 0 396 650 bzw. EP 0 631 813 A1 zeigen derartige Vorrichtungen, die stapelartig angeordnete Packungselemente aufweisen, die jeweils aus längs der Hauptströmungsrichtung ausgerichteten Lagen zusammengesetzt sind. Die Innenräume der Packungsteile werden durch parallele Kanäle gebildet, die in Form einer reliefartigen Profilierung der Wände vorliegen. Im letzteren (EP 0 631 813 A1) berühren sich im Innenbereich des Packungsteils die Wände punktuell und sind teilweise durch Punktschweißung oder Nieten verbunden. In beiden Fällen ist das Innere der verbundenen Lagen so ausgestaltet, dass die Befüllung der gesamten Zwischenräume mit Katalysatormaterial durch Aufgabe des Materials an der Packungsoberseite, das heißt von einem einzigen Füllpunkt erfolgen kann. Die Packungselemente der Katalysierenden Festbettreaktoren eignen sich auch für einen katalytischen Destillationsprozess (Rektifikation), insbesondere dann, wenn sie in einer Kolonne gemeinsam mit sogenannten strukturierten Packungen eingesetzt werden, die der reinen Stofftrennung dienen.

Aus der WO 90 02 603, US-5,470,542 und EP-A-0 428 265 sind Packungen für Stoffaustauschkolonnen bekannt, bei denen das auf die Flüssigkeit einwirkende Material in großen Kammern oder in miteinander verbundenen Kammern angeordnet ist. Nachteil dieser bekannten Vorrichtungen ist die undefinierte Stromführung von herabfließender Flüssigkeit und aufsteigendem Gas im Inneren der Kolonnen. Die bekannten Festbettreaktoren sind in der Lage, chemische Reaktionen zu katalysieren, aufgrund der fehlenden definierten Stromführung ist jedoch eine einfache Bestimmung von Auslegungsparametern, insbesondere der Trennleistung und der Reaktorleistung, und die daraus resultierende einfache Auslegung des Prozesses sowie die optimierende Zuschneidung von Trennleistung und Reaktorleistung auf den Einsatzzweck nicht möglich. Durch die unzureichend definierte Stromführung der Flüssigkeit ist die vollständige Benetzung des Katalysatormaterials und damit eine hohe Ausnutzung der Katalysatorwirkung nicht sichergestellt. Durch die unzureichend definierte Gasführung ist der Druckverlust in den Kolonnen unnötig hoch, wobei insbesondere die Behandlung temperaturempfindlicher Substanzen erschwert wird.

Schließlich müssen die bisherigen Vorrichtungen nach ihrem erstmaligen Einsatz ständig berieselt und feucht gehalten werden, wodurch der operative Aufwand für den Einsatz der Packungselemente des Katalysierenden Festbettreaktors steigt. Ein wiederholtes Trocknen muss vermieden werden, da das Katalysatormaterial (z.B. Ionenaustauscherharz) beim Befeuchten aufquillt und beim Trocknen schrumpft. Als Folge kommt es zur Ansammlung der Katalysatorpartikel im untersten Packungsbereich, da alle Bereiche eines katalysierenden Segments durchgehend miteinander verbunden sind. Beim erneuten Befeuchten und Quellen führt dies zu einer unerwünschten Aufweitung des unteren Packungsteils. Dies kann zu erheblichen Schwierigkeiten beim Ausbau und erneuten Einbau der Packung führen.

Aufgabe der Erfindung ist es, eine strukturierte Mehrzweckpackung zu schaffen, die eine möglichst genau definierte Stromführung von Flüssigkeit und Gas erlaubt und damit eine klare Zuordnung der Stoffaustausch- und der chemischen, biologischen oder physikalischen Zweitfunktionalität erlaubt. Die strukturierte Mehrzweckpackung soll auf diese Weise eine hohe Ausnutzung der Wirksamkeit des Zweitfunktionalitätsmaterials, z. B. Katalysatorpartikel, durch vollständige Benetzung mit Flüssigkeit sowie geringen Druckverlust in den Kolonnen ermöglichen. Die Konstruktion der Mehrzweckpackung soll sicherstellen, dass eine problemorientierte Anpassung ihrer Stoffaustauschfähigkeiten sowie der Wirksamkeit der chemischen, biologischen oder physikalischen Zweitfunktionalität einfach realisierbar ist. Schließlich soll eine Partikelansammlung und Aufweitung im unteren Packungsteil vermieden werden, um so ein zeitweiliges Trocknenlassen der Packung zu erleichtern und ihre Ein- bzw. Ausbauflexibilität zu erhöhen.

Ziel war die Entwicklung einer Packung zur simultanen Durchführung von Stofftrennung und Reaktion in einer Verfahrenseinheit, die hohe Trennleistung, hohe Effizienz der Katalysierungs-Ausnutzung, geringer Druckverlust sowie eine einfache und sichere Auslegung sowie eine funktionale Zuschneidung auf den Einsatzzweck erlaubt.

Diese Aufgabe wird erfindungsgemäß dadurch gelöst, dass die insbesondere kissenförmigen Kammern übereinander auf einer Schicht angeordnet sind, wobei jeweils zwischen zwei Kammern ein Abstand besteht, der von einem Flüssigkeit leitenden Bereich der Schicht überbrückt ist.

In den Kammern kommt die herabfließende Flüssigkeit mit dem darin befindlichen Material, insbesondere mit einem Katalysator in Kontakt. Danach tritt die Flüssigkeit aus der Kammer wieder heraus, fließt den Zwischenbereich herunter und steht hierbei für einen Stoffaustausch mit dem aufwärts strömenden Gas zur Verfügung. Der flächige Zwischenbereich der Schicht sorgt dafür, dass die Flüssigkeit in definierter Weise wieder in die nächste Kammer geführt wird. Das aufsteigende Gas wird mit Hilfe von Stoffaustauschelementen, die auch als Turbulenzpromotoren für die Gasströmung dienen, an den Zweitfunktionalitätselementen, die aus den Kammern und den Flüssigkeit leitenden Zwischenbereichen bestehen, vorbeigeführt.

Die strukturierte Mehrzweckpackung besteht somit aus alternierend abwechselnden Lagen von Stoffaustauschelementen und Zweitfunktionselementen. Die Zusammenstellung der funktionalen Teile erfolgt im Bausatzprinzip, so dass Lagen unterschiedlicher Funktionalität verschieden zusammengestellt und einfach ausgetauscht werden können. Darüber hinaus ist es möglich, Anzahl und Volumen der Zweitfunktionalitätselemente sowie die Anzahl der Stofftrennungselemente je nach betrachteter Aufgabe zu variieren, wobei einerseits die Stofftrennungseigenschaften, andererseits die Wirksamkeit der Zweitfunktionalität auf die Notwendigkeiten des betrachteten Stoffsystems ausgerichtet werden können. Auf diese Weise wird eine sehr große Einsatzflexibilität der Mehrzweckpackung erreicht. Ihre Nutzbarkeit ist daher nicht auf bestimmte heterogen katalysierte Rektifikationssysteme beschränkt, sie eignet sich vielmehr auch für andere Simultankombinationen wie die reaktive Absorption, die Stofftrennung mit simultaner biologischer Umwandlung usw.

Die Kammerbauweise der Zweitfunktionalitätselemente erlaubt es, die Mehrzweckpackung zu trocknen, ohne dass es zu der beschriebenen Ansammlung des Füllmaterials im unteren Teil der Elemente kommen kann. Der operative Aufwand beim Einsatz der Mehrzweckpackungen wird so reduziert, ohne ihre Ein- bzw. Ausbauflexibilität zu mindern.

Die abhängigen Ansprüche betreffen vorteilhafte Ausführungen der erfindungsgemäßen Mehrzweckpackung. Die Erfindung bezieht sich unter anderem auch auf die Anwendung bei der sogenannten reaktiven Rektifikation, der reaktiven Absorption sowie der Adsorption, einschließlich der Adsorption in Biofilmen. Sie bezieht sich weiterhin auch auf Kombinationen unterschiedlicher physikalischer Stofftrennungsmechanismen, wie der Rektifikation, Absorption etc. als Erstfunktionalität sowie z. B. der Adsorption oder Extraktion als Zweitfunktionalität.

Nachfolgend wird die Erfindung anhand der Zeichnungen näher beschrieben. Es zeigen
- Fig. 1a,b,c: eine Draufsicht verschiedener Ausführungen der erfindungsgemäßen Mehrzweckpackung,
- Fig. 2a,b: ausschnittsweise eine Vorderansicht verschiedener Ausführungen des Zweitfunktionalitätselements der erfindungsgemäßen Mehrzweckpackung mit abgeschlossenen Kammern,
- Fig. 3a,b: ausschnittsweise eine Seitenansicht verschiedener Ausführungen des Zweitfunktionalitätselements, der erfindungsgemäßen Mehrzweckpackung mit abgeschlossenen Kammern,
- Fig. 4a,b: eine perspektivische Ansicht verschiedener Ausführungen der erfindungsgemäßen Mehrzweckpackung mit Zweitfunktionalitätselementen und Stofftrennungselementen,
- Fig. 5a,b: eine Vorderansicht verschiedener Ausführungen des Zweitfunktionalitätselements der erfindungsgemäßen Mehrzweckpackung mit zerlegten Wänden.

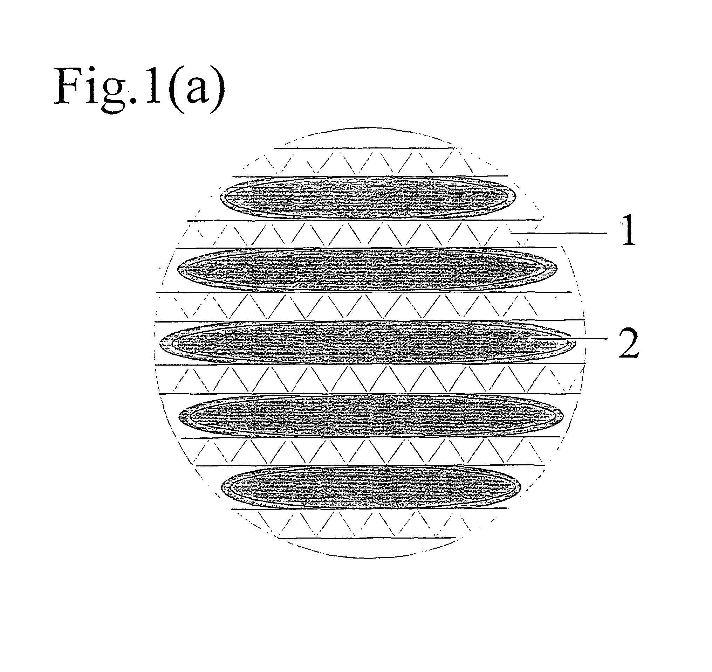

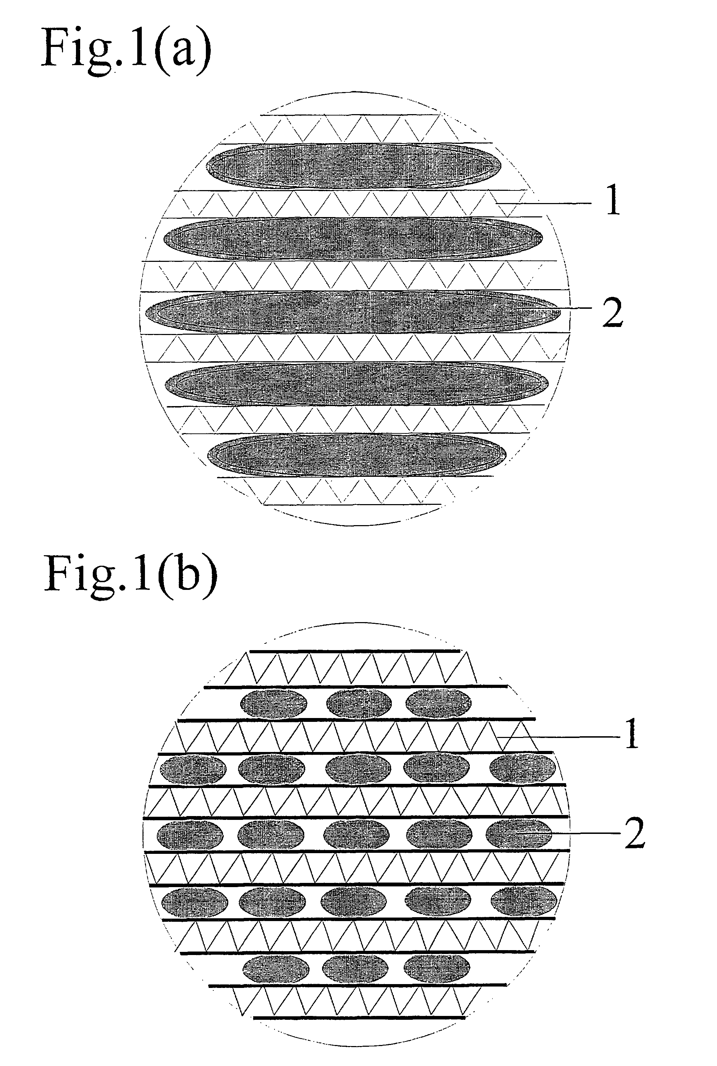

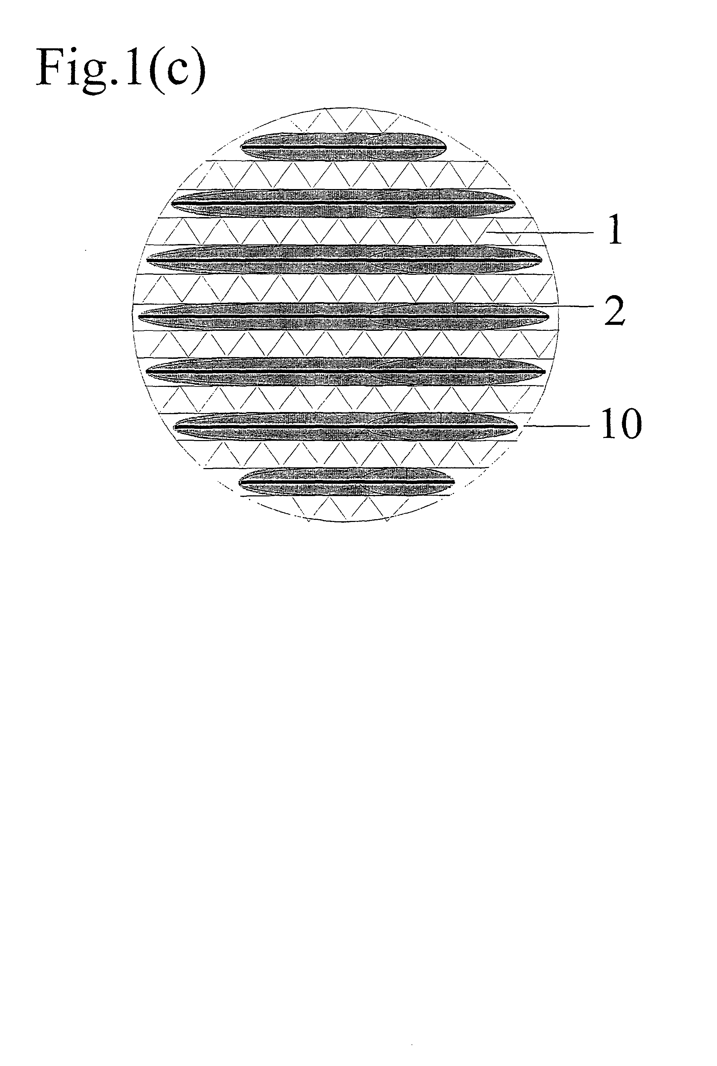

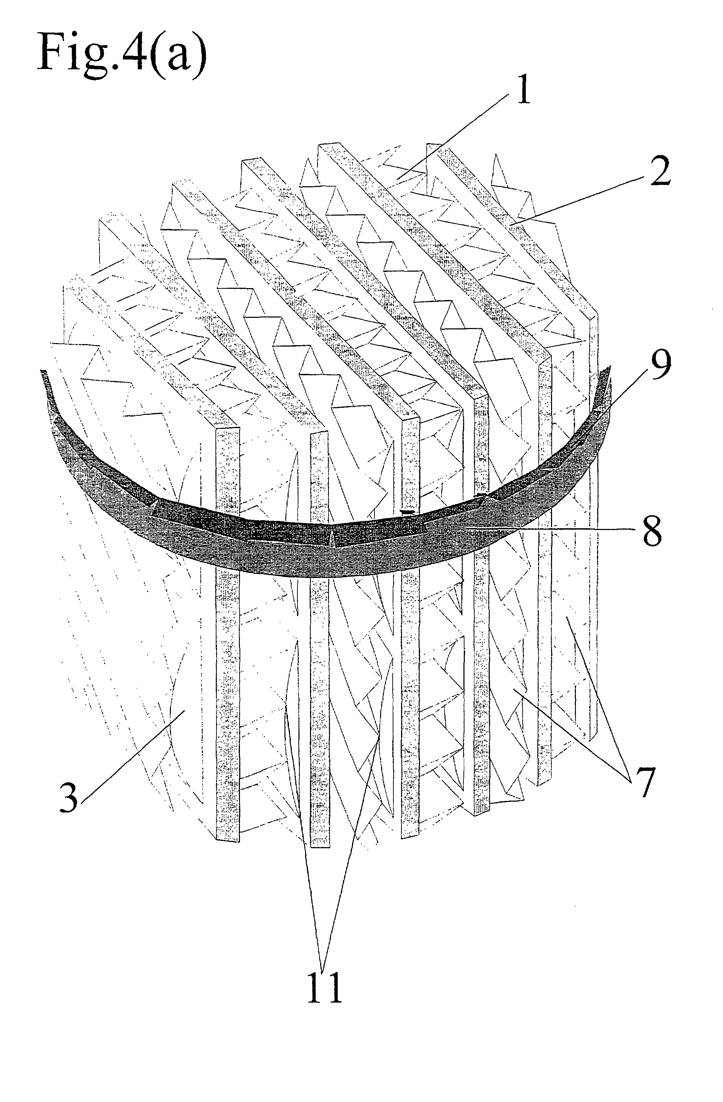

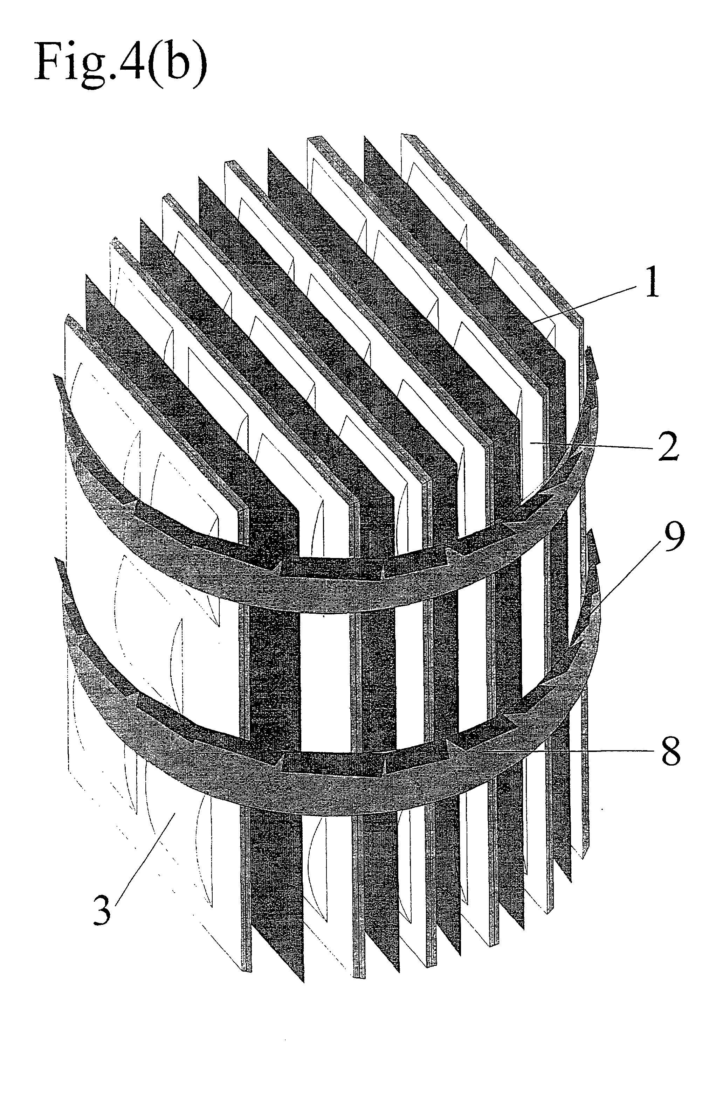

Die in Fig. 1a, b, c dargestellten Stofftrennungselemente 1 sowie die Zweitfunktionalitätselemente 2 sind in Lagen alternierend angeordnet, vergl. Fig. 4, Anzahl und Volumen der Zweitfunktionalitätselemente sowie die Anzahl der Stofftrennungselemente können je nach betrachteter Aufgabe variiert werden, beispielhaft dargestellt ist dies in den unterschiedlichen Ausführungen in Fig. 1a, b, c. Es können daher sowohl die Aufenthaltszeiten und wirksamen Oberflächen in den Zweitfunktionalitätselementen, als auch die Kontaktflächen in den Stofftrennungselementen auf das betrachtete Stoffsystem zugeschnitten werden. Bei der Montage können die Zweitfunktionalitätselemente wie in Fig. 1c durch fluiddurchlässige Stabilisierungsbleche 10 verstärkt werden, dies ist jedoch aus funktionalen Gründen nicht zwingend erforderlich, vergl. Fig. 1a, b.

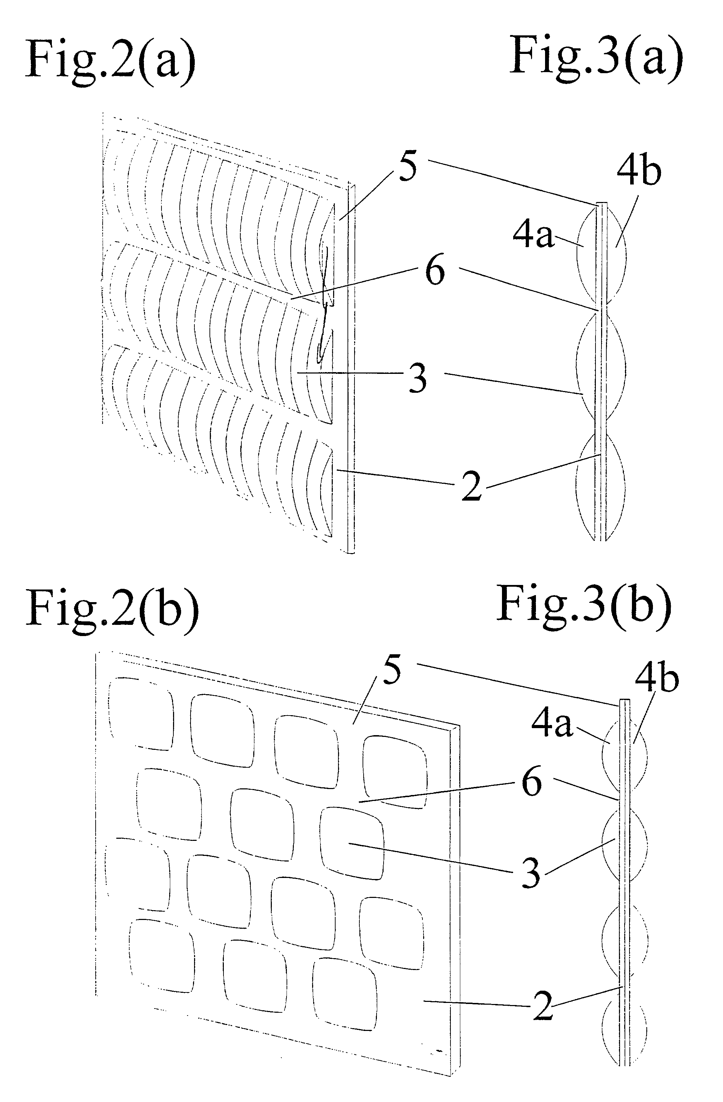

In Fig. 2a, b ist eine Vorderansicht verschiedener Ausführungen eines Zweitfunktionalitätselementes zu erkennen. Signifikant für alle Ausführungen sind die vollständig abgeschlossenen, hinreichend kleinen Kammern 3, die beispielsweise mit katalytischem, adsorbierendem oder biologisch wirksamem Material gefüllt sind. Die Wände der Kammern sind einerseits fluiddurchlässig, andererseits undurchlässig für das Füllmaterial. Wie in Fig. 2b können in einer horizontalen Lage mehrere Kammern 3 angeordnet werden, die in der nächst tieferen Lage alternierend versetzt werden können. Ebenso ist es möglich, wie in Fig. 2a in jeder horizontalen Lage nur eine abgeschlossene Kammer anzuordnen.

Fig. 3a, b zeigt Seitenansichten eines Zweitfunktionalitätselementes mit abgeschlossenen Kammern 3. Die Kammern entstehen, indem die Ober- und Unterseiten der Seitenwände 4a und 4b der Zweitfunktionalitätselemente sowohl an den Außenrändern 5 als auch in den Kammerzwischenräumen 6 fest zusammengefügt werden, z. B. geschweißt oder genietet, so dass die Kammern bezüglich des Füllmaterials dicht abgeschlossen sind. Es ist sinnvoll, einen geringen Freiraum zwischen den Zweifunktionalitätselementen und den Rändern der Packung zu belassen, um ein Umfließen der Zweitunktionalitätselemente zu erleichtern.

Fig. 4a, b zeigt eine perspektivische Ansicht eines Elementes der erfindungsgemäßen Mehrzweckpackung. Man erkennt die in Lagen alternierende Anordnung der unterschiedlichen Funktionsteile. Die Stofftrennungselemente 1, die funktional ausschließlich der Stofftrennung dienen, bestehen aus strukturierten Gewebebahnen bzw. Blechen 7 mit unterschiedlicher Profilierung. Dabei ist es vorteilhaft, wenn sich die Orientierung der Kanäle der Gewebebahnen alternierend verändert. Es können verschiedenste Ausführungen von strukturierten Gewebebahnen eingesetzt werden, die Auswahl der geeignetsten erfolgt im Sinne der zielgerichteten Optimierung in bezug auf das Einsatzziel der Mehrzweckpackung. Die Zusammenstellung der funktionalen Teile erfolgt nach einem Bausatzprinzip. Auf diese Weise wird eine sehr große Einsatzflexibilität der Mehrzweckpackung erreicht. An ihren Berührpunkten 11 können die unterschiedlichen funktionalen Einheiten fest verbunden werden, hierauf kann jedoch im Dienste einer größeren Flexibilität verzichtet werden. Ein Kragen 8 mit lappenartigen Vorsprüngen 9, wie bei strukturierten Packungen üblich, umschließt die Funktionselemente fest und stabilisiert die Mehrzweckpackung darüber hinaus in der Kolonne.

Das gezeigte Packungselement ist für eine Mehrzweckkolonne mit kreisförmigem Querschnitt vorgesehen, die Realisierung der Mehrzweckpackung ist jedoch grundsätzlich für alle Querschnitte möglich.

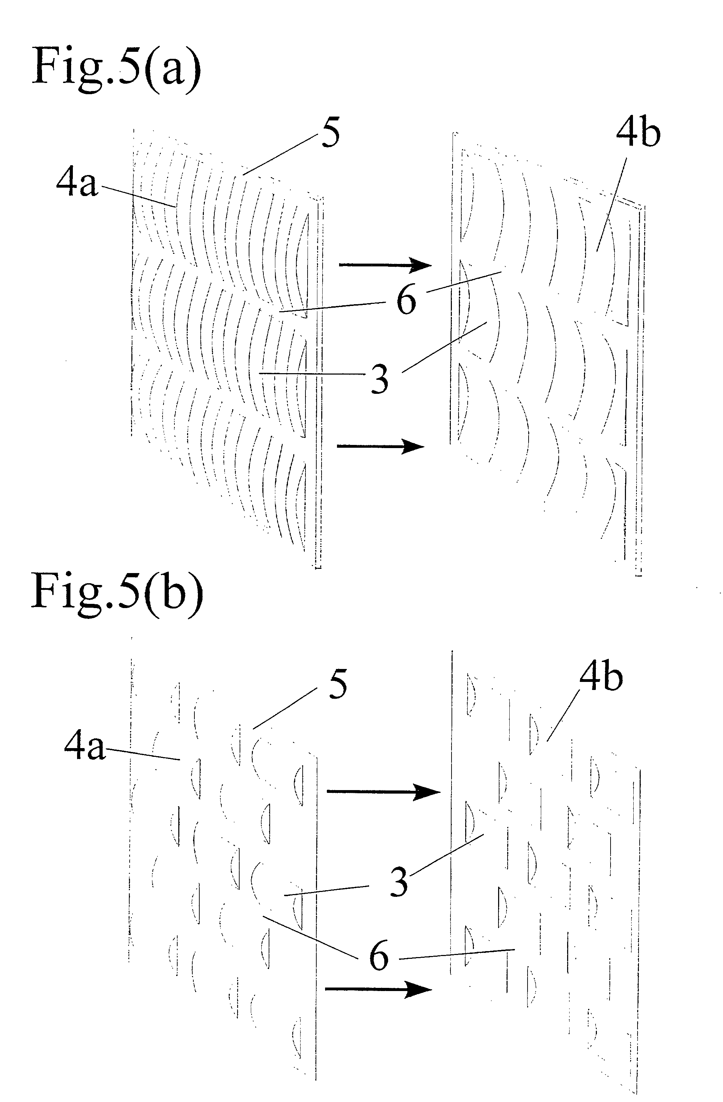

Fig. 5a, b zeigt verschiedene Ausführungen des Aufbaus eines Zweitfunktionalitätselementes. Zwei vorgeformte Gewebebahnen 4a und 4b werden zusammengefügt. Die entstehenden Kammern 3 werden vor dem Verschließen gefüllt. Eine vollständige Füllung der Kammern ist dabei nicht erforderlich. Die Füllmenge ist ebenfalls variable im Sinne der zielgerichteten Optimierung in bezug auf den Einsatzzweck.

Die strukturierten Mehrzweckpackungen können ebenfalls mit flüssigem Füllmaterial, z. B. katalysierenden Flüssigkeiten oder Absorptions- bzw. Extraktionsmitteln, verwendet werden. Dazu müssen die Wände der Zweitfunktionalitätselemente aus für die Füllungsflüssigkeit undurchlässigen Membranen bestehen, die für mindestens ein Fluid bzw. mindestens eine Fluidkomponente permeabel sind und die, falls notwendig, mit einer Metallgewebeschicht gestützt werden.

## Patentansprüche

1. Packung für Stoffaustausch-Kolonnen bestehend aus mindestens einer Schicht (2) mit abgeschlossenen Kammern (3) mit chemisch, physikalisch und/oder biofogisch, insbesondere katalytisch wirksamem Material, deren Wände flüssigkeitsdurchlässig sind, **dadurch gekennzeichnet, dass** die insbesondere kissenförmigen Kammern (3) übereinander auf einer Schicht (2) angeordnet sind, wobei jeweils zwischen zwei Kammern ein Abstand besteht, der von einem Flüssigkeit leitenden Bereich (6) der Schicht (2) überbruckt ist.

2. Packung nach Anspruch 1, **dadurch gekennzeichnet, dass** die Kammern (3) und die leitenden Bereiche (6) eine vertikale flächige Schicht (2) bilden.

3. Packung nach Anspruch 2, **dadurch gekennzeichnet, dass** zwischen den vertikale Kammern aufweisenden ersten Schichten (2) zweite vertikale Schichten (1) angeordnet sind, die eine profilierte, insbesondere gewellte Oberfläche aufweisen.

4. Packung nach einem der vorherigen Ansprüche, **dadurch gekennzeichnet, dass** die flächigen Elemente der Schichten (2) aus Flüssigkeit durchlässigem Material, insbesondere aus Gewebe, Gewirke, Siebmaterial, Netzmaterial, Geflecht und/oder einer Membran bestehen, das für das in der Kammer befindliche Material undurchlässig ist.

5. Packung nach einem der vorherigen Ansprüche, **dadurch gekennzeichnet, dass** die Stofftrennungselemente (1) aus strukturierten Gewebebahnen bzw. Blechen (7) mit Profilierung gebildet sind, wobei diese gemeinsam mit den Zweitfunktionalitätselementen (2) parallel zur Hauptströmungsrichtung oder im Winkel dazu versetzt in Lagen alternierend angeordnet werden.

6. Packung nach einem der vorherigen Ansprüche, **dadurch gekennzeichnet, dass** die Zweitfunktionalitätselemente (2) in Kammerbauweise mit abgeschlossenen Kammern (3) konstruiert sind, wodurch das Trocknenlassen der Packungselemente erleichtert wird.

7. Packung nach einem der vorherigen Ansprüche, **dadurch gekennzeichnet, dass** die Stofftrennungselemente (1) und Zweitfunktionalitätselement (2) in jeweils geeigneter Anzahl und Ausführung sowie jeweils geeignetem Füllmaterial in einem Baukastensystem zusammenstellbar sind.

8. Packung nach einem der vorherigen Ansprüche, **dadurch gekennzeichnet, dass** die Wände der Kammern (3) aus Metallgewebe und/oder aus für die Katalysatorflüssigkeit undurchlässigen Membranen bestehen, die für mindestens ein Fluid bzw. mindestens eine Fluidkomponente permeabel ist, und die, falls notwendig, mit einer Metallgewebeschicht gestützt werden.

9. Packung nach einem der vorherigen Ansprüche, **dadurch gekennzeichnet, dass** die Füllung der Kammern (3) der Schichten (2), z. B. Ionenaustauscherharze, Aktivkohle, Trägermaterial mit Biofilm, Extraktionsmittel, in fester Form als Granulat oder in flüssiger Form vorliegen.

10. Packung nach einem der vorherigen Ansprüche, **dadurch gekennzeichnet, dass** die Zweitfunktionalitätselemente (2) durch zusätzliche Zwischenbleche stabilisiert sind.

## Claims

1. Packing for substance exchange columns consisting of at least one layer (2) with sealed chambers (3) with chemically, physically and/or biologically, particularly catalytically active material, the walls of which are permeable to liquid, **characterised by** the fact that the particularly cushion shaped chambers (3) are arranged one on top of the other in a layer (2) in which there is a gap between two chambers, which is bridged by a liquid conducting area (6) of the layer (2).

2. Packing according to claim 1, **characterised by** the fact that the chambers (3) and the conducting areas (6) form a flat vertical layer (2).

3. Packing according to claim 2, **characterised by** the fact that second vertical layers (1) which have a profiled, particularly corrugated surface are arranged between the first layers (2) which have vertical chambers.

4. Packing according to one of the previous claims, **characterised by** the fact that the flat elements of the layers (2) consist of material which is permeable to liquid, particularly woven fabric, knitted fabric, mesh material, net material, netting, and/or a membrane, which is impermeable for the material in the chamber.

5. Packing according to one of the previous claims, **characterised by** the fact that the substance separating elements (1) are made of structured fabric webs or sheets (7) with profiling, in which these are arranged, alternating in layers, together with the second functional elements parallel to the main direction of flow or offset at an angle to it.

6. Packing according to one of the previous claims, **characterised by** the fact that the second functional elements (2) are constructed in a chamber type construction with sealed chambers (3), through which drying the packing elements is made easier.

7. Packing according to one of the previous claims, **characterised by** the fact that the substance separating elements (1) and second functional elements (2) can be put together in a modular system in any suitable number and type with suitable filling material.

8. Packing according to one of the previous claims, **characterised by** the fact that the walls of the chambers (3) consist of metal fabric and/or membranes which are impermeable for the catalyst liquid, which is permeable for at least one fluid or at least one fluid component, and which are supported by a layer of metal fabric, if necessary.

9. Packing according to one of the previous claims, **characterised by** the fact that the filling of the chambers (3) of the layers (2) is in solid form as granulate or in liquid form, for example, ion exchange resin, active carbon, base material with biofilm, extraction agent.

10. Packing according to one of the previous claims **characterised by** the fact that the second functional elements (2) are stabilised by additional shims.

## Revendications

1. Garniture pour colonnes de transfert de matière constituée d'au moins une couche (2), avec des chambres (3) isolées avec un matériau actif chimiquement, physiquement et/ou biologiquement, en particulier catalytiquement, dont les parois sont perméables aux liquides,
**caractérisée en ce que** les chambres (3), en particulier en forme de coussins, sont disposées les unes au-dessus des autres sur une couche (2), un écartement existant respectivement entre deux chambres, qui est ponté par une zone (6) de la couche (2) conduisant les liquides.

2. Garniture selon la revendication 1,
**caractérisée en ce que** les chambres (3) et les zones (6) conductrices forment une couche (2) mince verticale.

3. Garniture selon la revendication 2,
**caractérisée en ce que** des secondes couches (1) verticales, qui présentent une surface profilée, en particulier ondulée, sont disposées entre les premières couches (2) présentant des chambres verticales.

4. Garniture selon l'une des revendications précédentes,
**caractérisée en ce que** les éléments minces des couches (2) sont constitués d'un matériau perméable aux liquides, en particulier d'un tissu, d'un tricot d'un matériau de filtre, d'un matériau de filet, d'un treillis et/ou d'une membrane, qui est imperméable pour le matériau se trouvant dans la chambre.

5. Garniture selon l'une des revendications précédentes,
**caractérisée en ce que** les éléments (1) de séparation de matière sont formés à partir de feuilles textiles structurées ou respectivement de tôles (7) avec profilage, ceux-ci étant disposés alternativement en couches en commun à les éléments (2) de seconde fonctionnalité, parallèlement à la direction d'écoulement principal ou décalés angulairement par rapport à celle-ci.

6. Garniture selon l'une des revendications précédentes,
**caractérisée en ce que** les éléments (2) de seconde fonctionnalité sont construits selon un mode de construction de chambres avec des chambres (3) isolées, grâce à quoi le séchage des éléments de garniture est facilité.

7. Garniture selon l'une des revendications précédentes,
**caractérisée en ce que** les éléments (1) de séparation de matière et les éléments (2) de seconde fonctionnalité peuvent être assemblés en un système modulaire en nombre et réalisation respectivement appropriés ainsi que respectivement un matériau de remplissage approprié.

8. Garniture selon l'une des revendications précédentes,
**caractérisée en ce que** les parois des chambres (3) sont constituées de tissu métallique et/ou de membranes imperméables pour le liquide catalyseur, qui sont perméables pour au moins un fluide ou respectivement au moins un composant de fluide et qui, en cas de nécessité, sont supportés par un revêtement de tissu métallique.

9. Garniture selon l'une des revendications précédentes,
**caractérisée en ce que** le remplissage des chambres (3) des couches (2), par exemple résine échangeuse d'ions, charbon actif, matériau de support avec biofilm, agent d'extraction, sont présents sous forme solide en tant que granulet ou sous forme liquide.

10. Garniture selon l'une des revendications précédentes,
**caractérisée en ce que** les éléments (2) de seconde fonctionnalité sont stabilisés par des tôles intermédiaires supplémentaires.
